# EUROPEAN PATENT SPECIFICATION

(11) **EP 3 413 108 B1**
(45) Date of publication and mention of the grant of the patent: **02.12.2020**
(21) Application number: 16893047.7
(22) Date of filing: 09.03.2016
(51) Int. Cl.: G02B 6/44, G02B 6/38

(54) **OPTICAL CABLE DISTRIBUTION BOX AND OPTICAL CABLE DISTRIBUTION DEVICE**
OPTISCHER KABELVERTEILERSCHRANK UND OPTISCHE KABELVERTEILERVORRICHTUNG
BOÎTIER DE DISTRIBUTION DE CÂBLE OPTIQUE, ET DISPOSITIF DE DISTRIBUTION DE CÂBLE OPTIQUE

(43) Date of publication of application: 12.12.2018
(73) Proprietor: Huawei Technologies Co., Ltd., Longgang District Shenzhen, Guangdong 518129 (CN)
(72) Inventor: PEI, Guohua, Shenzhen Guangdong 518129 (CN); WU, Wenxin, Shenzhen Guangdong 518129 (CN); RAMALLO, Alejandro Sierra, Shenzhen Guangdong 518129 (CN)
(74) Representative: Gill Jennings & Every LLP
(86) International application number: PCT/CN2016/075979
(87) International publication number: WO 2017/152395

(56) References cited:
- WO-A1-2014/209254
- WO-A2-2015/193384
- CN-A- 103 760 645
- CN-U- 201 497 824
- CN-U- 202 886 680
- CN-U- 203 414 650
- US-A1- 2005 175 307
- US-A1- 2011 026 894
- US-A1- 2012 230 644

## Description

### TECHNICAL FIELD

This application relates to the field of communications devices, and in particular, to a fiber access terminal and a fiber distribution apparatus using the fiber access terminal.

### BACKGROUND

With advantages of large capacities, long distances, and electromagnetic interference immunity, fiber-optic communication better meets people's requirements for a huge information volume and high precision in future. In addition, costs are low. Therefore, a transmission medium like an optical fiber is popularized on a large scale. Currently, fiber-optic networks have gradually come into home use, in the form of fiber to the home (Fiber To The Home, FTTH).

In a fiber to the home project, as a common indoor and outdoor node product in an optical distribution network (Optical Distribution Network, ODN), a fiber access terminal (Fiber Access Terminal, FAT) is increasingly widely applied to a fiber to the home technology. The fiber access terminal is used to connect optical fibers. Welding, wiring, and optical distribution functions of optical fibers are implemented in the fiber access terminal.

A fiber adapter of an existing fiber access terminal is usually mounted in the fiber access terminal. When a user gains access to the fiber adapter by using a drop fiber, the user needs to open the fiber access terminal before performing a connection operation. Therefore, the connection operation is complex and inefficient. US20120230644 describes a fiber optic splice enclosure system includes an enclosure and first and second endplate assemblies. The enclosure defines an enclosure chamber. The first and second endplate assemblies are adapted to be interchangeably mounted on the enclosure to provide different respective configurations for connecting fiber optic cables to the enclosure.
US20050175307 describes an optical connection closure has at least one connector port located within an external wall of the closure for receiving a connectorized optical fiber of a distribution cable on the inside of the closure and a pre-connectorized fiber optic drop cable on the outside of the closure. The closure includes a base, a cover affixed to the base and movable between a closed position and an opened position, and an end wall that defines at least a portion of at least one cable opening for receiving the distribution cable in a butt-type or a throughtype closure configuration. The base and the cover define an interior cavity that optionally contains a splice tray for interconnecting the optical fiber of the distribution cable with a pigtail to create the connectorized optical fiber. The connector port may be located within an end wall, a bottom wall or a top wall of the closure. US20110026894 describes a fiber distribution hub defines at least one incoming cable port and at least one outgoing cable port. The fiber distribution hub includes a termination region, a splitter region, and a splice region. Some example hubs include a pass-through panel configured to manage a loop portion of a feeder cable. Some example hubs include a cable manager for managing distribution cables at the outgoing cable port. Some example hubs include pivotal splice tray stacks. Some example hubs include a swing frame on which the termination region and splitter region are positioned.

### SUMMARY

To resolve the technical problems, embodiments of this application provide a fiber access terminal that can be quickly connected to a drop fiber, and a fiber distribution apparatus using the fiber access terminal.

To achieve the foregoing objective, the following technical solutions are used in implementations of this application:

According to a first aspect, an embodiment of this application provides a fiber access terminal, according to appended claim 1.

In this implementation, because the mounting panel is arranged in the opening, and the mounting panel, the first housing, and the second housing are all in separate structures, when a drop fiber is to be connected to the fiber access terminal, there is no need to open the fiber access terminal, and the drop fiber can be directly inserted in an output end of the fiber adapter. The insertion is convenient and efficient. In this way, the fiber access terminal can be quickly connected to the drop fiber. When the fiber adapter needs to be mounted, replaced, or maintained, the mounting panel may be separated from the first housing and the second housing, so that the mounting panel is detached from the receptacle, and larger operation space is available on two sides of the mounting panel. This facilitates the use and maintenance of the fiber access terminal and prevents a mounting quality deterioration problem of the fiber adapter due to insufficient operation space.

In this implementation, the mounting panel is fixedly connected to the fiber management tray, and the fiber management tray can rotate relative to the second housing. This implementation allows a customer to arrange a cable onsite, and for the first time of cabling, move out the fiber management tray and the mounting panel as a whole to perform an operation. This is extremely convenient. In addition, a position relationship between the fiber optic splitter and a transmission fiber is fixed. In other words, a position relationship between two ends of an input pigtail that is of the fiber optic splitter and connected to the transmission fiber is fixed. Therefore, the input pigtail in this implementation can avoid being dragged and pulled during the use and maintenance of the fiber access terminal, and this greatly reduces a risk of attenuation or even disconnection of an optical signal.

The mounting panel is removably connected to the fiber management tray.

With reference to the first possible implementation, in a second possible implementation, the second housing includes a limiting stopper, the fiber management tray includes a protrusion part, the limiting stopper and the protrusion part are located in a connection part between the second housing and the fiber management tray and cooperate with each other to limit a position relationship between the fiber management tray and the second housing, to prevent the fiber management tray from swinging back relative to the second housing. This allows a user to conveniently maintain the fiber access terminal.

Specifically, the second housing includes a first mounting bracket and the first mounting bracket is located on one edge of the second housing, the fiber management tray includes a second mounting bracket and the second mounting bracket is located on one edge of the fiber management tray, and the second mounting bracket is rotationally connected to the first mounting bracket, that is, the fiber management tray can turn over relative to the second housing and a turnover shaft is located on an edge of the fiber management tray. In addition, the limiting stopper is located on the first mounting bracket, the protrusion part is located on the second mounting bracket, and when the fiber management tray rotates, relative to the second housing, to a predetermined position, the limiting stopper locks the protrusion part to prevent the fiber management tray from swinging back relative to the second housing.

The first mounting bracket includes a second socket, the second mounting bracket includes a second rotating shaft and the second rotating shaft extends into the second socket, a fastening part is arranged on an end part of the second rotating shaft, and a size of an external profile of the fastening part is adjustable, so that the external profile of the fastening part is greater than or less than an inner diameter of the second socket. In other words, the fastening part is an elastic component, for example, an elastic clapping hook. When the elastic component is in a natural state, a size of the elastic component is greater than the inner diameter of the second socket. The cooperation between the elastic component and the second socket can limit a position relationship between the second socket and the second rotating shaft and prevent the second rotating shaft from detaching from the second socket. When the elastic component is deformed under stress, the elastic component can extend into the second socket to release a connection relationship between the second rotating shaft and the second socket. Therefore, the fastening part allows the fiber management tray to be rotationally connected to the second housing without falling off, or to be detached from the second housing.

With reference to the first possible implementation, in a third possible implementation, the fiber management tray includes a first mounting slot, a second mounting slot, and a third mounting slot, the first mounting slot is configured to mount the fiber optic splitter, the second mounting slot is located on a side that is of the first mounting slot and far away from the mounting panel, to mount a fiber management tray platter to house an input pigtail of the fiber optic splitter, the third mounting slot is located between the first mounting slot and the mounting panel to mount a pigtail protective casing, and the pigtail protective casing is configured to house an output pigtail of the fiber optic splitter.

In this implementation, the input pigtail and the output pigtail of the fiber optic splitter can both be housed and protected. In addition, because the fiber management tray platter and the pigtail protective casing are separately located on two sides of the fiber optic splitter, cabling of the input pigtail and the output pigtail of the fiber optic splitter is simple and convenient.

With reference to the third possible implementation, in a fourth possible implementation, the mounting panel includes an end wall and a side wall, the side wall is arranged to encircle the end wall, the side wall encloses accommodating space, the accommodating space is used to house a part of the fiber adapter, the side wall is configured to connect the first housing and the second housing, the adapter mounting hole is located in the end wall, and the pigtail protective casing is bonded on the side wall.

In this implementation, because the pigtail protective casing is bonded on the side wall, the accommodating space is connected to the space in the pigtail protective casing. In this way, a connection path between an input end of the fiber adapter and the input pigtail of the fiber optic splitter is short, and both the input end and the input pigtail can be protected.

With reference to the first aspect or the first possible implementation of the first aspect, in a fifth possible implementation, the mounting panel provides a first notch, the second housing provides a second notch, the first notch is connected to the second notch to form a fiber mounting hole, and the fiber mounting hole passes through the receptacle to the outside of the fiber access terminal.

In this implementation, when a transmission fiber needs to be mounted, the mounting panel may be moved or turned over, so that the mounting panel is detached from the receptacle, a larger operation space is available on two sides of the mounting panel, and the transmission fiber is conveniently connected to the fiber access terminal.

In addition, when the fiber management tray is in a rolling connection with the mounting panel, a position relationship between the fiber optic splitter and the transmission fiber is fixed. In other words, a position relationship between two ends of an input pigtail that is of the fiber optic splitter and connected to the transmission fiber is fixed. Therefore, the input pigtail in this implementation can avoid being dragged and pulled during the use and maintenance of the fiber access terminal, and this greatly reduces a risk of attenuation or even disconnection of an optical signal.

With reference to the fifth possible implementation, in a sixth possible implementation, the fiber mounting hole includes a first fiber mounting hole and a second fiber mounting hole, the first fiber mounting hole is configured to mount a feeder fiber of transmission fibers, and the second fiber mounting hole is configured to mount a distribution fiber of the transmission fibers.

In this implementation, a user can add a distribution fiber to meet a usage requirement without affecting the mounted feeder fiber and drop fiber.

With reference to the fifth or the sixth possible implementation, in a seventh possible implementation, the fiber management tray further includes a fiber fastener configured to fasten the transmission fibers on the fiber management tray. This helps further ensure that the input pigtail can avoid being dragged and pulled during the use and maintenance of the fiber access terminal.

In an eighth possible implementation, the first housing is rotationally connected to the second housing, the fiber access terminal further includes a fastening plate and a sliding bar, the fastening plate is connected to the first housing and provides a sliding slot, the fastening plate provides at least one limiting area located in the sliding slot, one end of the sliding bar is connected to the second housing, and the other end of the sliding bar is housed in the sliding slot and cooperates with the limiting area to limit an angle between the first housing and the second housing.

There are at least three limiting areas configured to limit the angle between the first housing and the second housing to a range between 0° and 120°, so that a user can conveniently maintain the fiber access terminal.

In a ninth possible implementation, the fiber access terminal further includes a first sealing element and a second sealing element, the first sealing element is located in a connection part between the first housing and the second housing, and the second sealing element is located in a connection part among the mounting panel, the first housing, and the second housing. In this way, the fiber access terminal has a good sealing environment.

Protrusion ribs are arranged separately on a connection surface between the first housing and the first sealing element and on a connection surface between the second housing and the first sealing element, and the protrusion ribs are arranged in a staggered manner to improve sealing performance.

With reference to the first aspect or the ninth possible implementation of the first aspect, in a tenth possible implementation, the first housing includes a first outer surface departing from the second housing, and the second housing includes a second outer surface departing from the first housing, a plurality of fastening slots are formed in a one-to-one correspondence on the first outer surface and the second outer surface, the fiber access terminal further includes a plurality of fasteners, and the plurality of fasteners are stuck, in a one-to-one correspondence, into the plurality of fastening slots, so as to tightly close up the fiber access terminal. This ensures that the fiber access terminal has good sealing and is both waterproof and dustproof.

According to an aspect, an embodiment of this application further provides a fiber distribution apparatus, including a fiber adapter and the fiber access terminal according to any one of the above, where the fiber adapter is mounted to the adapter mounting hole in the fiber access terminal, and the fiber access terminal can be quickly connected to a drop fiber.

### BRIEF DESCRIPTION OF DRAWINGS

To describe the technical solutions in this application more clearly, the following briefly describes the accompanying drawings required for describing the implementations. Apparently, the accompanying drawings in the following description show merely some implementations of this application, and a person of ordinary skill in the art may still derive other drawings from these accompanying drawings without creative efforts.
FIG. 1 is a schematic structural diagram of a fiber distribution apparatus according to an embodiment of this application;
FIG. 2 is a schematic diagram of a part of a structure of a fiber access terminal according to an embodiment of this application;
FIG. 3 is another schematic structural diagram of a fiber distribution apparatus according to an embodiment of this application;
FIG. 4 is still another schematic structural diagram of a fiber distribution apparatus according to an embodiment of this application;
FIG. 5 is an enlarged schematic diagram of a structure of a position A in FIG. 1;
FIG. 6 is a schematic structural diagram of a fiber management tray in a fiber access terminal according to an embodiment of this application;
FIG. 7 is a schematic exploded diagram of a part of a structure of a fiber distribution apparatus according to an embodiment of this application;
FIG. 8 is a schematic diagram of another part of a structure of a fiber access terminal according to an embodiment of this application;
FIG. 9 is a schematic structural diagram of a fiber access terminal according to an embodiment of this application;
FIG. 10 is an enlarged schematic diagram of a structure of a position B in FIG. 3;
FIG. 11 is yet another schematic structural diagram of a fiber distribution apparatus according to an embodiment of this application;
FIG. 12 is a schematic structural diagram of a first sealing element in a fiber access terminal according to an embodiment of this application;
FIG. 13 is a schematic exploded diagram of another fiber access terminal according to an embodiment of this application;
FIG. 14 is a schematic structural diagram of another fiber access terminal according to an embodiment of this application;
FIG. 15 is a schematic exploded diagram of a fiber adapter in a fiber distribution apparatus according to an embodiment of this application; and
FIG. 16 is a schematic diagram of a connection of a communications base station according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are merely some but not all of the embodiments of this application. All other embodiments obtained by a person of ordinary skill in the art based on the embodiments of this application without creative efforts shall fall within the protection scope of this application.

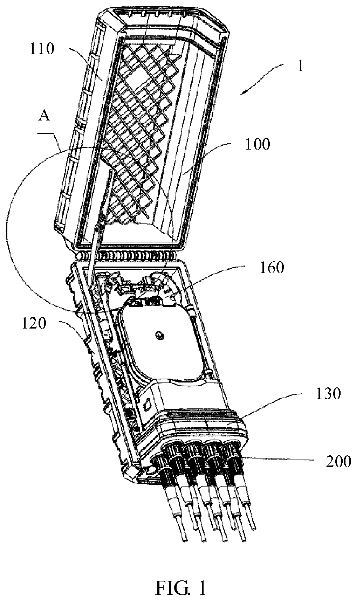

Referring to all of FIG. 1 to FIG. 3, an embodiment of this application provides a fiber access terminal 100, including a first housing 110, a second housing 120, and a mounting panel 130. The first housing 110 is connected to the second housing 120 to form a receptacle 140 and an opening 141, and the opening 141 is located on a side of the receptacle 140. The mounting panel 130 is housed in the opening 141 and connected to both the first housing 110 and the second housing 120. The mounting panel 130 includes an adapter mounting hole 133, and the adapter mounting hole 133 passes through the receptacle 140 to the outside of the fiber access terminal 100 to mount a fiber adapter 200.

In this embodiment, because the adapter mounting hole 133 in the fiber access terminal 100 passes through the receptacle 140 to the outside of the fiber access terminal 100, when the fiber adapter 200 needs to be mounted to the adapter mounting hole 133, an input end 210 of the fiber adapter 200 is located in the receptacle 140 and an output end 220 is located outside the receptacle 140. In this case, when a drop fiber is to be connected to the fiber access terminal 100, there is no need to open the fiber access terminal 100, and the drop fiber can be directly inserted in the output end 220 of the fiber adapter 200. The connection operation for the drop fiber is convenient and efficient. In other words, the fiber access terminal 100 can be quickly connected to the drop fiber.

It should be noted that in this embodiment, the mounting panel 130, the first housing 110, and the second housing 120 are mutually independent components, in other words, all in separate structures. The mounting panel 130, the first housing 110, and the second housing 120 not only may cooperate with each other to form the receptacle 140, but also may separate from each other or be connected without encircling the receptacle 140. Therefore, when a user needs to mount, replace, or maintain the fiber adapter 200, the mounting panel 130 may be separated from the first housing 110 and the second housing 120, so that the mounting panel 130 is detached from the receptacle 140. In this way, relatively large space is available on two sides of the mounting panel 130, so that the user has sufficient operation space to mount, replace, or maintain the fiber adapter 200, and the use and maintenance of the fiber access terminal 100 is convenient and efficient. In addition, this prevents a mounting quality deterioration problem of the fiber adapter 200 due to insufficient operation space. In particular, when a plurality of fiber adapters 200 are arranged in arrays, the use and maintenance efficiency of the fiber access terminal 100 in this embodiment is far higher than that in the prior art.

In this embodiment, referring to FIG. 1, the first housing 110 is rotationally connected to the second housing 120, the first housing 110 and the second housing 120 can mutually rotate relative to each other, and the first housing 110 can be closed or open relative to the second housing 120. Certainly, the first housing 110 and the second housing 120 may be in another connection mode, for example, snap-on connection, threaded connection, and rotating buckle connection. There are at least four adapter mounting holes 133 and the adapter mounting holes 133 are arranged in arrays.

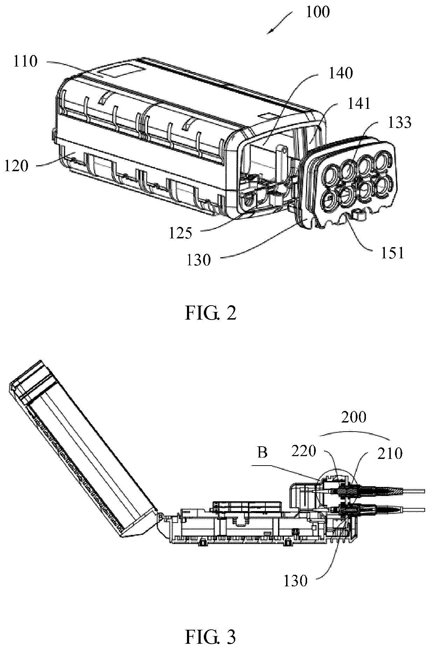

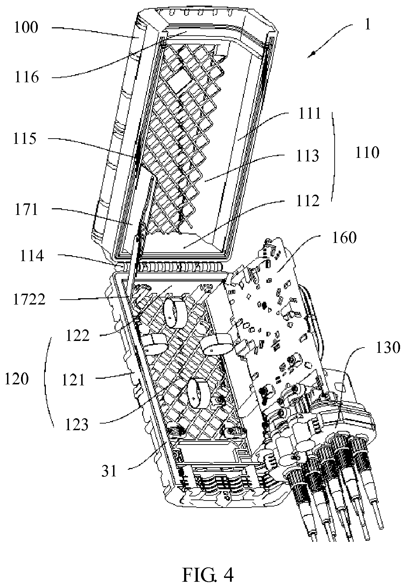

Referring to all of FIG. 1, FIG. 2, and FIG. 4, in an optional embodiment, the first housing 110 includes a first side wall 111 and a first end wall 112. The first side wall 111 includes two opposite side edges and connects one end and the other end of the two side edges. A cross section of the first side wall 111 being perpendicular to the side edges of the first side wall 111 is approximately in an upside-down "concave" shape. The first end wall 112 includes four sides (which may include a straight-line side and/or a curved-line side). One end of the first side wall 111 is connected to all of three sequentially connected sides of the first end wall 112, and the first side wall 111 and the first end wall 112 jointly encircle a first groove 113. The second housing 120 includes a second side wall 121 and a second end wall 122. The second side wall 121 includes two opposite side edges and connects one end and the other end of the two side edges. A cross section of the second side wall 121 being perpendicular to the side edges of the second side wall 121 is approximately in a "concave" shape. The second end wall 122 includes four sides (which may include a straight-line side and/or a curved-line side). One end of the second side wall 121 is connected to all of three sequentially connected sides of the second end wall 122, and the second side wall 121 and the second end wall 122 jointly encircle a second groove 123. A last side of the first end wall 112 is connected to a last side of the second end wall 122 by using a hinge 114. When the last side of the first end wall 112 is in a closed connection with the last side of the second end wall 122, the two side edges of the first side wall 111 are also in a one-to-one closed connection with the two side edges of the second side wall 121 (as shown in FIG. 2), the first groove 113 and the second groove 123 are combined to form the receptacle 140, and the other end of the first side wall 111 and the other end of the second side wall 121 jointly form an opening 141. In this embodiment, when the first end wall 112 and the second end wall 122 rotate, relative to each other, around the hinge 114, the first housing 110 and the second housing 120 rotate relative to each other and may show a plurality of different connection states, for example, closed, half-open, or fully open (as shown in FIG. 4).

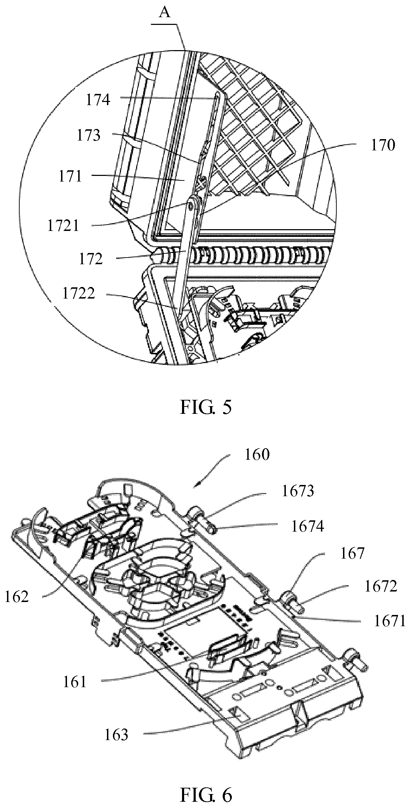

Further, referring to both FIG. 1 and FIG. 5, in an optional embodiment, the fiber access terminal 100 further includes a limiting component 170. The limiting component 170 includes a fastening plate 171 and a sliding bar 172, the fastening plate 171 is connected to the first housing 110 and provides a sliding slot 173, the fastening plate provides at least one limiting area 174 located in the sliding slot, one end 1722 of the sliding bar 172 is connected to the second housing 120, and the other end 1721 of the sliding bar 172 is housed in the sliding slot 173 and cooperates with the limiting area 174 to limit an angle between the first housing 110 and the second housing 120, so that a user can conveniently maintain the fiber access terminal 100. When the first housing 110 rotates relative to the second housing 120, the fastening plate 171 also moves, and the other end 1721 of the sliding bar 172 moves in the sliding slot 173. For example, the fastening plate 171 includes a first limiting area, a second limiting area, and a third limiting area. The first limiting area, the second limiting area, and the third limiting area are respectively located on a head end, a middle positioning end, and a tail end of the sliding slot 173. The middle positioning end is located between the head end and the tail end. When the other end 1721 is stuck in the first limiting area, the first housing 110 is closed on the second housing 120. When the other end 1721 is stuck in the second limiting area, the first housing 110 is partially open relative to the second housing 120. When the other end 1721 is stuck in the third limiting area, the first housing 110 is fully open relative to the second housing 120, and in this case, an angle ranging approximately from 90° to 120° is formed between the first housing 110 and the second housing 120.

In an optional embodiment, referring to all of FIG. 2, FIG. 4, and FIG. 5, the fastening plate 171 is fastened near a first side edge (one of the two side edges described above) of the first side wall 111 in the first housing 110, the one end 1722 of the sliding bar 172 is fastened near a first side edge (one of the two side edges described above) of the second side wall 121 in the second housing 120, and the first side edge of the first side wall 111 and the first side edge of the second side wall 121 are on a same side of the receptacle 140.

Further, referring to all of FIG. 1, FIG. 2, FIG. 4, and FIG. 6, in an optional embodiment, the fiber access terminal 100 further includes a fiber management tray 160, the fiber management tray 160 is located in the receptacle 140 and rotationally connected to the second housing 120, the mounting panel 130 is fixedly connected to the fiber management tray 160, and the fiber management tray 160 is configured to mount a fiber optic splitter (not shown in the figures) and fasten an optical fiber.

In this case, because the fiber management tray 160 is fixedly connected to the mounting panel 130, when the fiber management tray 160 is moved or rotated, the mounting panel 130 is also moved or rotated (as shown in FIG. 4). In addition, because the fiber optic splitter is mounted on the fiber management tray 160 and the fiber adapter 200 is mounted on the mounting panel 130, a position relationship between the fiber optic splitter and the fiber adapter 200 is fixed. In other words, a position relationship between two ends of an output pigtail that is of the fiber optic splitter and connected to the fiber adapter 200 is fixed. In this way, the output pigtail in this embodiment can avoid being dragged and pulled during the use and maintenance of the fiber access terminal 100, and this greatly reduces a risk of attenuation or even disconnection of an optical signal. In addition, when the fiber management tray 160 and the mounting panel 130 are both located outside the receptacle 140, there is relatively large operation space around the fiber management tray 160 and the mounting panel 130, and this allows the fiber access terminal 100 to be maintained smoothly.

It should be understood that the fiber management tray 160 is fixedly connected to the mounting panel 130 means that a mutual position relationship between the fiber management tray 160 and the mounting panel 130 is fixed when the fiber management tray 160 is connected to the mounting panel 130. Certainly, the connection between the fiber management tray 160 and the mounting panel 130 is mostly a removable connection, for example, a threaded connection or a screw connection.

Further, referring to all of FIG. 2, FIG. 6, FIG. 7, and FIG. 8, the second housing 120 includes a limiting stopper 1241, the fiber management tray 160 includes a protrusion part 1671, the limiting stopper 1241 and the protrusion part 1671 are located in a connection part between the second housing 120 and the fiber management tray 160 and cooperate with each other to limit a position relationship between the fiber management tray 160 and the second housing 120, to prevent the fiber management tray 160 from swinging back relative to the second housing 120. This allows a user to conveniently maintain the fiber access terminal 110.

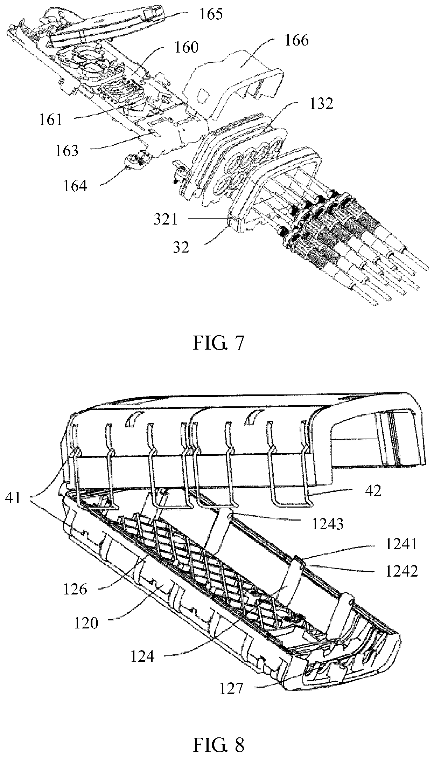

Specifically, the second housing 120 includes a first mounting bracket 124 and the first mounting bracket 124 is located on one edge of the second housing 120, the fiber management tray 160 includes a second mounting bracket 167 and the second mounting bracket 167 is located on one edge of the fiber management tray 160, and the second mounting bracket 167 is rotationally connected to the first mounting bracket 124, that is, the fiber management tray 160 can turn over relative to the second housing 120 and a turnover shaft is located on an edge of the fiber management tray 160. In addition, the first mounting bracket 124 includes a limiting stopper 1241, and the second mounting bracket 167 includes a protrusion part 1671. When the fiber management tray 160 rotates, relative to the second housing 120, to a predetermined position (shown in FIG. 8), the limiting stopper 1241 locks the protrusion part 1671 to prevent the fiber management tray 160 from swinging back relative to the second housing 120. Preferably, the predetermined position is a position when the fiber management tray 160 and the second housing 120 form approximately 100°. When the second mounting bracket 167 rotates relative to the first mounting bracket 124, the fiber management tray 160 can rotate relative to the second housing 120, so that the fiber management tray 160 may be located in the receptacle 140 or may be located outside the receptacle 140. When the fiber management tray 160 is located outside the receptacle 140, there is relatively large operation space around the fiber management tray 160, and this facilitates maintenance of the fiber access terminal 100.

Referring to all of FIG. 2, FIG. 4, FIG. 6, and FIG. 7, in an optional embodiment, the first mounting bracket 124 is fastened on a second side edge of the second side wall 121 (the one edge of the second housing 120), the second mounting bracket 167 is fastened on one side of the fiber management tray 160 (the one edge of the fiber management tray 160), and the second side edge and the one side of the fiber management tray 160 are located on a same side of the receptacle 140. When the fiber access terminal 100 is in normal use, the fiber management tray 160 is located in a second groove 123, that is, located in the receptacle 140. When the fiber access terminal 100 needs to be maintained, the fiber management tray 160 is rotated relative to the second housing 120 to leave the second groove 123, so that there is relatively large operation space around the fiber management tray 160 and maintenance is convenient.

Specifically, referring to all of FIG. 4, FIG. 6, and FIG. 7, the first mounting bracket 124 includes a first socket 1242 and a second socket 1243, and the second mounting bracket 167 includes a first rotating shaft 1672 and a second rotating shaft 1673. An outer diameter of the first rotating shaft 1672 is equal to a diameter of a via in the first socket 1242, the first rotating shaft 1672 extends into the first socket 1242, and a connection between the first rotating shaft 1672 and the first socket 1242 is a removable connection. An outer diameter of the second rotating shaft 1673 is equal to an inner diameter (a diameter of an inner via) in the second socket 1243, the second rotating shaft 1673 extends into the second socket 1243, and a connection between the second rotating shaft 1673 and the second socket 1243 is a removable connection. In particular, an end part of the second rotating shaft 1673 includes a fastening part 1674 whose external profile is adjustable. In a normal case, the external profile of the fastening part 1674 is always relatively large, so that the second rotating shaft 1673 is prevented from detaching from the second socket 1243 (at this time, the first rotating shaft 1672 is also connected to the first socket 1242), that is, the fiber management tray 160 can be prevented from falling off from the second housing 120. When the external profile of the fastening part 1674 becomes smaller under external stress, the fastening part 1674 can pass through the via in the second socket 1243, so that the second rotating shaft 1673 is detached from the second socket 1243 (at this time, the first rotating shaft 1672 is also detached from the first socket 1242), that is, the fiber management tray 160 can be disassembled from the second housing 120. In other words, the fastening part 1674 is an elastic component, for example, an elastic clapping hook. When the elastic component is in a natural state, a size of the elastic component is greater than the inner diameter of the second socket 1243. The cooperation between the elastic component and the second socket 1243 can limit a position relationship between the second socket 1243 and the second rotating shaft 1673 and prevent the second rotating shaft 1673 from detaching from the second socket 1243. When the elastic component is deformed under stress, the elastic component can extend into the second socket 1243 to release a connection relationship between the second rotating shaft 1673 and the second socket 1243.

In this embodiment, because the fiber management tray 160 not only can rotate relative to the second housing 120, but also can be detached from the second housing 120, the convenience in the use and maintenance of the fiber access terminal 100 is maximized, and a user can flexibly adjust a relative position relationship between the fiber management tray 160 and the second housing 120 based on a specific environmental requirement.

In this embodiment, the protrusion part 1671 is arranged near the first rotating shaft 1672, and the limiting stopper 1241 is arranged on an outer surface of the first socket 1242. When the first rotating shaft 1672 is rotationally connected to the first socket 1242, the limiting stopper 1241 and the protrusion part 1671 are arranged in approximately opposite directions. When the first rotating shaft 1672 and the first socket 1242 rotate relative to each other, the protrusion part 1671 and the limiting stopper 1241 move relative to each other to cooperatively limit a position or be detached from each other.

In an optional embodiment, referring to FIG. 6, the fastening part 1674 includes a first part and a second part that are arranged at intervals. A spacing between the first part and the second part is adjustable, so that a size of the external profile of the fastening part 1674 is adjustable.

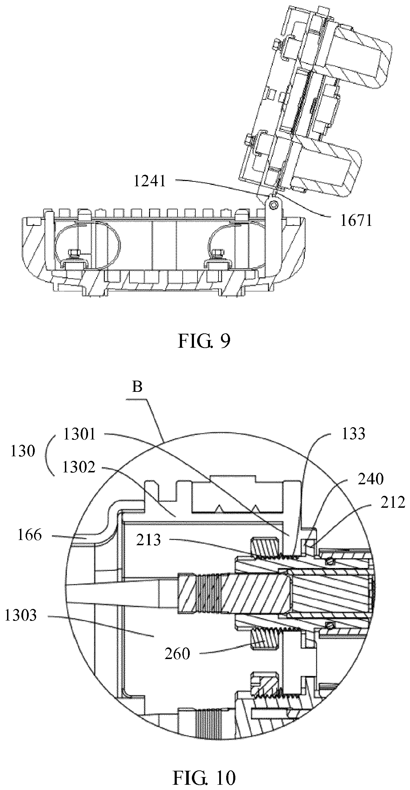

Further, referring to both FIG. 6 and FIG. 9, optionally, the fiber management tray 160 further includes a first mounting slot 161, a second mounting slot 162, and a third mounting slot 163. The first mounting slot 161 is configured to mount the fiber optic splitter, the second mounting slot 162 is located on a side that is of the first mounting slot 161 and far away from the mounting panel 130, to mount a fiber management tray platter 165 to house an input pigtail of the fiber optic splitter, the third mounting slot 163 is located between the first mounting slot 161 and the mounting panel 130 to mount a pigtail protective casing 166, and the pigtail protective casing 166 is configured to house an output pigtail of the fiber optic splitter. In this way, the input pigtail and the output pigtail of the fiber optic splitter can both be housed and protected. In addition, because the fiber management tray platter 165 and the pigtail protective casing 166 are separately located on two sides of the fiber optic splitter, cabling of the input pigtail and the output pigtail of the fiber optic splitter is simple and convenient.

Further, referring to all of FIG. 1, FIG. 3, and FIG. 10, optionally, the mounting panel 130 includes an end wall 1301 and a side wall 1302, the side wall 1302 is arranged to encircle the end wall 1301, the side wall 1302 encloses accommodating space 1303, the accommodating space 1303 is used to house a part of the fiber adapter 200, the side wall 1302 is configured to connect the first housing 110 and the second housing 120, the adapter mounting hole 133 is located in the end wall 1301, and the pigtail protective casing 166 is bonded on the side wall 1302.

In this embodiment, because the pigtail protective casing 166 is bonded on the side wall 1302, the accommodating space 1303 is connected to the space in the pigtail protective casing 166. In this way, a connection path between the input end 210 of the fiber adapter 200 and the input pigtail of the fiber optic splitter is short, and both the input end 210 and the input pigtail can be protected.

It should be understood that a specific position relationship between the first mounting slot 161, the second mounting slot 162, and the fiber fastener 164 in this application may be in another arrangement manner, and a main arrangement principle is ensuring reasonable and efficient fiber cabling in the receptacle 140.

Further, referring to all of FIG. 1, FIG. 2, FIG. 4, and FIG. 11, optionally, the mounting panel 130 provides a first notch 151, the second housing 120 provides a second notch 125, the first notch 151 is connected to the second notch 125 to form a fiber mounting hole 153, and the fiber mounting hole 153 passes through the receptacle 140 to the outside of the fiber access terminal 100, so that a transmission fiber (not shown in the figures) extends to the receptacle 140. In this case, when a transmission fiber needs to be mounted, the mounting panel 130 may be moved or turned over, so that the mounting panel 130 is detached from the receptacle 140, larger operation space is available on two sides of the mounting panel 130, and the transmission fiber is conveniently connected to the fiber access terminal 100.

In this embodiment, the transmission fiber passes through the fiber mounting hole 153 to extend to the receptacle 140 and is connected to the input pigtail of the fiber optic splitter. Because the fiber management tray 160 is fixedly connected to the mounting panel 130, when the fiber management tray 160 is moved or rotated, the mounting panel 130 is also moved or rotated. In addition, because the fiber optic splitter is mounted on the fiber management tray 160 and the transmission fiber is mounted on the mounting panel 130, a position relationship between the fiber optic splitter and the transmission fiber is fixed. In other words, a position relationship between two ends of the input pigtail that is of the fiber optic splitter and connected to the transmission fiber is fixed. In this way, the input pigtail in this embodiment can avoid being dragged and pulled during the use and maintenance of the fiber access terminal 100, and this greatly reduces a risk of attenuation or even disconnection of an optical signal.

In an optional embodiment, referring to both FIG. 1 and FIG. 2, the first notch 151 and the second notch 125 are both semicircular holes. Certainly, in another embodiment, the first notch 151 and the second notch 125 may be in another shape. It should be understood that, in this embodiment, the first notch 151 is arranged on a connection surface that is on the mounting panel 130 and that is connected to the second housing 120, and the second notch 125 is arranged on a connection surface that is on the second housing 120 and that is connected to the mounting panel 130. When the mounting panel 130 is tightly mounted on the second housing 120, the first notch 151 is opposite to the second notch 125 to form the complete fiber mounting hole 153. When a transmission fiber needs to be mounted, the first notch 151 is moved away from the second notch 125, and the transmission fiber can be quickly stuck in the first notch 151 or the second notch 125, and then the first notch 151 and the second notch 125 form the fiber mounting hole 153. An inner surface of the fiber mounting hole 153 fully fits an outer surface of the transmission fiber. In addition, the inner diameter of the fiber mounting hole 153 may be slightly less than the outer diameter of the transmission fiber, so that the transmission fiber is stuck and then fastened.

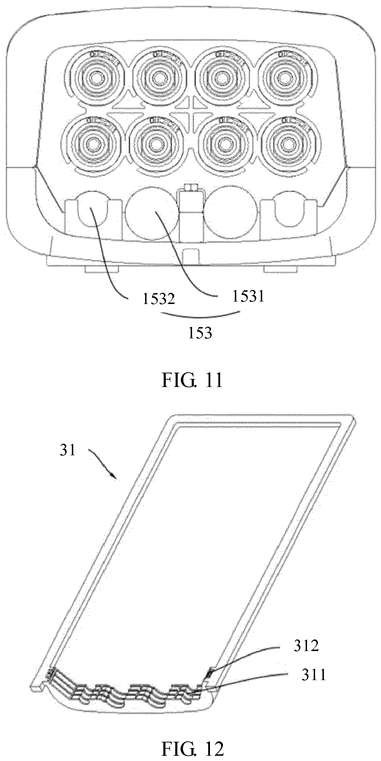

Further, referring to both FIG. 4 and FIG. 11, the fiber mounting hole 153 includes a first fiber mounting hole 1531 and a second fiber mounting hole 1532, the first fiber mounting hole 1531 is configured to mount a feeder fiber of transmission fibers, and the second fiber mounting hole 1532 is configured to mount a distribution fiber of the transmission fibers. During onsite fiber cabling, the feeder fiber of the transmission fibers is usually introduced for the first time of mounting and mounted to the first fiber mounting hole 1531. If a distribution fiber needs to be added subsequently, the first housing 110 may be opened, the mounting panel 130 may be moved to a position with larger operation space, and then the distribution fiber may be mounted to the second fiber mounting hole 1532. In this construction method, there is no need to put the whole fiber access terminal 100 on the ground to perform a construction operation, and therefore, impact on the mounted feeder fiber and drop fiber is minimized.

Generally, because an outer diameter of a feeder fiber is usually greater than an outer diameter of a distribution fiber, an inner diameter of the first fiber mounting hole 1531 is less than or equal to the outer diameter of the feeder fiber, an inner diameter of the second fiber mounting hole 1532 is less than or equal to the outer diameter of the distribution fiber, and the inner diameter of the first fiber mounting hole 1531 is greater than the inner diameter of the second fiber mounting hole 1532. When the inner diameter of the first fiber mounting hole 1531 is slightly less than the outer diameter of the feeder fiber, the feeder fiber is tightly fastened in the first fiber mounting hole 1531, and this improves sealing of the fiber access terminal 100. Similarly, when the inner diameter of the second fiber mounting hole 1532 is slightly less than the outer diameter of the distribution fiber, the distribution fiber is tightly fastened in the second fiber mounting hole 1532, and this also improves sealing of the fiber access terminal 100.

Preferably, there are two first fiber mounting holes 1531 and two second fiber mounting holes 1532. The second fiber mounting holes 1532 are arranged near the first fiber mounting holes 1531, and the two first fiber mounting holes 1531 and two second fiber mounting holes 1532 pair off. For example, the two first fiber mounting holes 1531 are arranged at intervals and in parallel, the two second fiber mounting holes 1532 are separately arranged on two sides or the middle of the two first fiber mounting holes (as shown in FIG. 11), or the first fiber mounting holes 1531 and the second fiber mounting holes 1532 are arranged alternately.

Further, referring to both FIG. 2 and FIG. 7, optionally, the fiber management tray further includes a fiber fastener 164 configured to fasten, on the fiber management tray 160, the transmission fibers that extend to the receptacle 140. This helps further ensure that the input pigtail can avoid being dragged and pulled during the use and maintenance of the fiber access terminal 100.

Further, referring to all of FIG. 4, FIG. 7, and FIG. 9, optionally, the fiber access terminal 100 further includes a first sealing element 31 and a second sealing element 32, the first sealing element 31 is located in a connection part between the first housing 110 and the second housing 120, and the second sealing element 32 is located in a connection part among the mounting panel 130, the first housing 110, and the second housing 120. In this embodiment, the arrangement of the first sealing element 31 and the second sealing element 32 allows the fiber access terminal 100 to have a better sealing environment.

In an optional embodiment, referring to all of FIG. 4, FIG. 7, and FIG. 9, the first housing 110 includes a first sealing surface 115 and a second sealing surface 116, the second housing 120 includes a third sealing surface 126 and a fourth sealing surface 127, and the mounting panel 130 includes a fifth sealing surface 132. The first sealing surface 115 is connected to the second sealing surface 116, the fifth sealing surface 132 is connected to both the second sealing surface 116 and the fourth sealing surface 127, to seal the receptacle 140. The first sealing element 31 is arranged between the first sealing surface 115 and the second sealing surface 116, and the second sealing element 32 is arranged among the fifth sealing surface 132, the second sealing surface 116, and the fourth sealing surface 127.

Specifically, the two side edges of the first side wall 111 in the first housing 110 and the last side of the first end wall 112 jointly form the first sealing surface 115, the first side wall 111 includes a first inner surface facing the first groove 113, and the first inner surface and an end part near the other end of the first side wall 111 form the second sealing surface 116. The two side edges of the second side wall 121 in the second housing 120 and the last side of the second end wall 122 jointly form the third sealing surface 126, the second side wall 121 includes a second inner surface facing the second groove 123, and the second inner surface and an end part near the other end of the second side wall 121 form the fourth sealing surface 127. The mounting panel 130 includes an inner surface and an outer surface that are opposite to each other and a side face that connects the inner surface and the outer surface, the inner surface faces the receptacle 140, the outer surface departs from the receptacle 140, and the side face forms the fifth sealing surface 132.

In an optional embodiment, referring to all of FIG. 4, FIG. 7, FIG. 9, and FIG. 12, the first sealing element 31 further includes an extension part 311, so that the first sealing element 31 forms an end-to-end annular sealing element. The extension part 311 is located between the second sealing surface 116 and the second sealing element 32. A slot 312 is formed on the extension part 311, a protrusion 321 is formed on the second sealing element 32, and when first sealing element 31 is closely connected to the second sealing element 32, the protrusion 321 is stuck in the slot 312, so that fastening and position limiting are implemented, and a sealing effect is further improved.

In this embodiment, two parallel protrusion ribs are formed on the first sealing surface 115 and the second sealing surface 116, to enhance sealing of the fiber access terminal 100. In addition, alternatively, protrusion ribs may be formed on the third sealing surface 126, the fourth sealing surface 127, and the fifth sealing surface 132, to further improve a sealing effect of the fiber access terminal 100. Certainly, protrusion ribs may be distributed in a staggered manner on mutually connected sealing surfaces, to form labyrinthine sealing or more layers of sealing.

In an optional embodiment, referring to all of FIG. 2, FIG. 4, and FIG. 7, the first side wall 111 of the first housing 110 includes a first outer surface that is opposite to the first inner surface, and the second side wall 121 of the second housing 120 includes a second outer surface that is opposite to the second inner surface. A plurality of fastening slots 41 are formed in a one-to-one correspondence on the first outer surface and the second outer surface, the fiber access terminal 100 includes a plurality of fasteners 42, and the plurality of fasteners 42 are stuck, in a one-to-one correspondence, into the plurality of fastening slots 41, so as to tightly lock up the first housing 110, the second housing 120, and the mounting panel 130 to form the fully sealed receptacle 140 (in this case, the fiber mounting hole 153 tightly compresses a transmission fiber mounted on the fiber mounting hole 153). This ensures that the fiber access terminal 100 has good sealing and can meet IP68 (fully dustproof and can be continuously soaked in water under a specific pressure) protection.

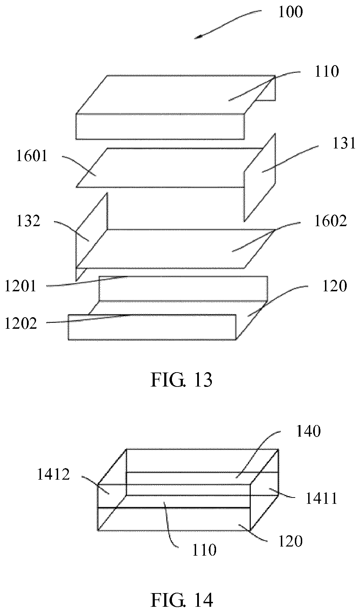

Referring to both FIG. 13 and FIG. 14, an embodiment of this application further provides another fiber access terminal 100, including a first housing 110, a second housing 120, two fiber management trays (a first fiber management tray 1601 and a second fiber management tray 1602), and two mounting panels (a first mounting panel 131 and a second mounting panel 132). The first housing 110 is connected to the second housing 120 to form a receptacle 140 and two openings (1411 and 1412), and the two openings (1411 and 1412) are separately located on two opposite ends of the receptacle 140. The first fiber management tray 1601 and the second fiber management tray 1602 are arranged to stack up in the receptacle 140, and the first fiber management tray 1601 and the second fiber management tray 1602 are separately and rotationally connected to two opposite side edges (1201 and 1202) of the second housing 120. The receptacle 140 is located between the two side edges (1201 and 1202), the two side edges (1201 and 1202) each extends from an edge of one of the openings 1411 to an edge of the other opening 1412, and the two fiber management trays (1601 and 1602) are configured to mount a fiber optic splitter and fasten a pigtail. The first mounting panel 131 and the second mounting panel 132 are arranged opposite to each other and fixedly connected, in a one-to-one correspondence, to the first fiber management tray 1601 and the second fiber management tray 1602. The first mounting panel 131 and the second mounting panel 132 are separately housed in the two openings (1411 and 1412) and are connected to both the first housing 110 and the second housing 120, the first mounting panel 131 and the second mounting panel 132 each includes an adapter mounting hole (not shown in the figures), and the adapter mounting hole passes through the receptacle to the outside of the fiber access terminal 100 to mount a fiber adapter.

In this embodiment, because the adapter mounting hole in the fiber access terminal 100 passes through the receptacle to the outside of the fiber access terminal 100, when the fiber adapter needs to be mounted to the adapter mounting hole, an input end of the fiber adapter is located in the receptacle and an output end is located outside the receptacle. In this case, when a drop fiber is to be connected to the fiber access terminal 100, there is no need to open the fiber access terminal 100, and the drop fiber can be directly inserted in the output end of the fiber adapter. The connection operation for the drop fiber is convenient and efficient. In other words, the fiber access terminal 100 can be quickly connected to the drop fiber.

It should be noted that in this embodiment, the first mounting panel 131, the second mounting panel 132, the first housing 110, and the second housing 120 are mutually independent components. The first mounting panel 131, the second mounting panel 132, the first housing 110, and the second housing 120 not only may cooperate with each other to form the receptacle 140, but also may separate from each other or be connected without encircling the receptacle 140. Therefore, when a user needs to mount, replace, or maintain the fiber adapter, the first mounting panel 131 and the second mounting panel 132 may be moved or turned over, so that the first mounting panel 131 and the second mounting panel 132 are detached from the receptacle 140. In this way, relatively large space is available on two sides of the first mounting panel 131 and the second mounting panel 132, so that the user has sufficient operation space to mount, replace, or maintain the fiber adapter, and the use and maintenance of the fiber access terminal 100 is convenient and efficient. In addition, this prevents a mounting quality deterioration problem of the fiber adapter due to insufficient operation space. In particular, when a plurality of fiber adapters are arranged in arrays, the use and maintenance efficiency of the fiber access terminal 100 in this embodiment is far higher than that in the prior art.

In this case, because the first fiber management tray 1601 is fixedly connected to the first mounting panel 131, when the first fiber management tray 1601 is moved or rotated, the first mounting panel 131 is also moved or rotated. In addition, because the fiber optic splitter may be mounted on the first fiber management tray 1601 and the fiber adapter may be mounted on the first mounting panel 131, a position relationship between the fiber optic splitter and the fiber adapter is fixed. In other words, a position relationship between two ends of an output pigtail that is of the fiber optic splitter and connected to the fiber adapter is fixed. In this way, the output pigtail in this embodiment can avoid being dragged and pulled during the use and maintenance of the fiber access terminal 100, and this greatly reduces a risk of attenuation or even disconnection of an optical signal. Similarly, a position relationship between two ends of an output pigtail that is connected to the fiber adapter fastened on the second mounting panel 132 and that is connected to the fiber optic splitter fastened on the second fiber management tray 1602 is also fixed. In this way, the output pigtail can avoid being dragged and pulled during the use and maintenance of the fiber access terminal 100, and this greatly reduces a risk of attenuation or even disconnection of an optical signal.

In this embodiment, the first fiber management tray 1601 and the second fiber management tray 1602 are arranged to stack up in the receptacle 140, and this improves space utilization of the receptacle 140 and reduces costs of the fiber access terminal 100. In addition, because the first fiber management tray 1601 and the second fiber management tray 1602 are separately and rotationally connected to the two opposite side edges (1201 and 1202) of the second housing 120, during maintenance of the fiber access terminal 100, the first fiber management tray 1601 and the second fiber management tray 1602 may be turned over sequentially and may be both turned over to a relatively appropriate angle to facilitate maintenance performed by a user.

It should be understood that other characteristics of the another fiber access terminal 100 in this embodiment may be designed with reference to other characteristics of the fiber access terminal 100 described above (referring to all of FIG. 1 to FIG. 14). Details are not described herein again.

Referring to all of FIG. 1 to FIG. 4, an embodiment of this application further provides a fiber distribution apparatus 1, including a fiber adapter 200 and the fiber access terminal 100 according to the foregoing embodiments, and the fiber adapter 200 is mounted to the adapter mounting hole 133 in the fiber access terminal 100. The fiber adapter 200 includes an input end 210 and an output end 220 that are arranged opposite to each other, the fiber adapter 200 is mounted to the adapter mounting hole 133, the input end 210 of the fiber adapter 200 is located in the receptacle 140, and the output end 220 is located outside the receptacle 140, so that a drop fiber is connected to the receptacle 140.

In this embodiment, because the input end 210 of the fiber adapter 200 is located in the receptacle 140, and the output end 220 is located outside the receptacle 140, when a drop fiber is to be connected to the fiber access terminal, there is no need to open the fiber access terminal 100, and the drop fiber can be directly inserted in the output end 220. The connection operation for the drop fiber is convenient and efficient. In other words, the fiber access terminal 100 can be quickly connected to the drop fiber. In addition, because the output end 220 is located outside the receptacle 140, when a user inserts the drop fiber, the insertion is visible, and the fiber adapter 200 can implement an insertion guiding function.

It should be noted that in this embodiment, the mounting panel 130, the first housing 110, and the second housing 120 are mutually independent components. The mounting panel 130, the first housing 110, and the second housing 120 not only may cooperate with each other to form the receptacle 140, but also may separate from each other or be connected without encircling the receptacle 140. Therefore, when a user needs to mount, replace, or maintain the fiber adapter 200, the mounting panel 130 may be moved or turned over, so that the mounting panel 130 is detached from the receptacle 140. In this way, relatively large space is available on two sides of the mounting panel 130, so that the user has sufficient operation space to mount, replace, or maintain the fiber adapter 200, and the use and maintenance of the fiber access terminal 100 is convenient and efficient. In addition, this prevents a mounting quality deterioration problem of the fiber adapter 200 due to insufficient operation space. In particular, when a plurality of fiber adapters 200 are arranged in arrays, the use and maintenance efficiency of the fiber access terminal 100 in this embodiment is far higher than that in the prior art.

Further, referring to all of FIG. 1, FIG. 2, FIG. 4, and FIG. 6, in an optional embodiment, the fiber distribution apparatus further includes a fiber management tray 160 and a fiber optic splitter (not shown in the figures). The fiber management tray 160 is located in the receptacle 140 and flexibly connected to the second housing 120. The mounting panel 130 is fixedly connected to the fiber management tray 160, and the fiber management tray 160 includes a first mounting slot 161. The fiber optic splitter is mounted to the first mounting slot 161 and is located on one surface of the fiber management tray 160. In this case, because the fiber management tray 160 is fixedly connected to the mounting panel 130, when the fiber management tray 160 is moved or rotated, the mounting panel 130 is also moved or rotated. In addition, because the fiber optic splitter is mounted on the fiber management tray 160 and the fiber adapter 200 is mounted on the mounting panel 130, a position relationship between the fiber optic splitter and the fiber adapter 200 is fixed. In other words, a position relationship between two ends of an output pigtail that is of the fiber optic splitter and connected to the fiber adapter 200 is fixed. In this way, the output pigtail in this embodiment can avoid being dragged and pulled during the use and maintenance of the fiber access terminal 100, and this greatly reduces a risk of attenuation or even disconnection of an optical signal.

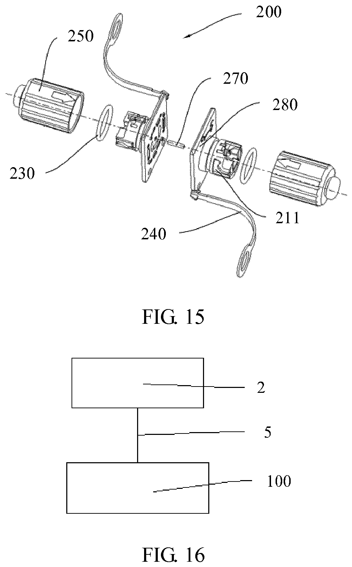

Further, referring to FIG. 15, in an optional embodiment, the fiber adapter 200 includes two sets of adapter components 280 and a ceramic tube 270. The ceramic tube 270 is arranged between the two sets of adapter components 280 through ultrasonic welding. Two symmetric screw lock slots 211 are arranged on outer surfaces of the adapter components 280, so as to buckle with locking points in another component (for example, a fiber connection head) to implement locking connection. An O-shaped sealing ring 230 is further sleeved on the outer surfaces of the adapter components 280 to improve a sealing effect when the adapter components 280 are connected with another component. As shown in FIG. 12, a structure of the fiber adapter 200 is symmetric relative to a center of the fiber adapter 200. The fiber adapter 200 further includes two lanyards 240 and two dustproof caps 250. The dustproof caps 250 are tied to the adapter components 280 by using the lanyards 240. Two symmetric protruding locking points are arranged on inner surfaces of the dustproof caps 250 to cooperate with the screw lock slots 211 of the adapter components 280, to implement locking connection and achieve dustproof and waterproof effects. When the fiber adapter 200 is not connected to another component, the dustproof caps 250 are connected to the adapter components 280.

Referring to both FIG. 9 and FIG. 12, in this embodiment, optionally, the lanyards 240 are also sealing rings. The fiber adapter 200 further includes a positioning protrusion 212 and outer threads 213. When the fiber adapter 200 is mounted in the adapter mounting hole 133, the positioning protrusion is stuck on the outer surface of the mounting panel 130. The lanyards 240 are located between the outer surface of the mounting panel 130 and the positioning protrusion 212. The outer threads 213 are located in the receptacle 140. The fiber adapter 200 is locked on the mounting panel 130 by using a nut 260 with inner threads. In this case, the lanyards 240 are compressed between the outer surface of the mounting panel 130 and the positioning protrusion 212 to implement sealing and enable the fiber distribution apparatus 1 to achieve waterproof and dustproof sealing effects.

Further, in this embodiment, a fiber connector may be arranged on an access end of a drop fiber, and the fiber connector is connected to the adapter components, to connect the drop fiber into the receptacle. In an optional embodiment, the fiber connector includes an optical fiber, a rear retainer, a lock cap, a ferrule protector, a guide pin, a connector component, a lanyard, and a dustproof cap. Two symmetric protruding locking points are arranged on an inner surface of the locking cap, to cooperate with the screw lock slots of the adapter components to implement locking connection and connect the fiber connector to the fiber adapter.

It should be understood that the fiber distribution apparatus in this embodiment is described mainly by using an example in which the fiber distribution apparatus includes the fiber access terminal 100 (as shown in FIG. 1 to FIG. 12) arranged with the single mounting panel 130. Alternatively, the fiber distribution apparatus in this embodiment may include the fiber access terminal 100 (as shown in FIG. 13 and FIG. 14) arranged with both the first mounting panel 131 and the second mounting panel 132. Because principles are similar, details are not described herein again.

Referring to FIG. 16, an embodiment of this application further provides a communications site, including a central office terminal 2 and a fiber access terminal 100. The fiber access terminal 100 is the fiber access terminal 100 according to any one of the foregoing embodiments. The central office terminal may be an optical line terminal (Optical Line Terminal, OLT) and is connected to the fiber access terminal 100 by using a transmission fiber 5.

The embodiments of this application are described in detail above. The principle and implementation of this application are described herein by using specific examples. The description about the foregoing embodiments is merely provided to help understand the method and core ideas of this application. In addition, a person of ordinary skill in the art can make variations and modifications in terms of the specific implementations and application scopes as defined by the appended claims. Therefore, the content of specification shall not be construed as a limitation to this application.

## Claims

1. A fiber access terminal (100), comprising:
a first housing (110) and a second housing (120), wherein the first housing is connected to the second housing (120) to form a receptacle (140) and an opening (141), and the opening is located on a side of the receptacle (140);
a mounting panel (130) that is housed in the opening (141) and connected to both the first housing (110) and the second housing (120), wherein the mounting panel (130) comprises an adapter mounting hole (133), and the adapter mounting hole (133) passes through the receptacle (140) to the outside of the fiber access terminal (100) to mount a fiber adapter (200), **characterized in that** the fiber access terminal further comprises a fiber management tray (160), the fiber management tray (160) is located in the receptacle and rotationally connected to the second housing (120), the mounting panel (130) is fixedly connected to the fiber management tray (160), and the fiber management tray (160) is configured to mount a fiber optic splitter and fasten an optical fiber.

2. The fiber access terminal (100) according to claim 1, wherein the second housing comprises a limiting stopper (1241), the fiber management tray (160) comprises a protrusion part (1671), the limiting stopper (1241) and the protrusion part (1671) are located in a connection part between the second housing (120) and the fiber management tray (160) and cooperate with each other to limit a position relationship between the fiber management tray (160) and the second housing (120), to prevent the fiber management tray (160) from swinging back relative to the second housing (120).

3. The fiber access terminal (100) according to claim 1, wherein the fiber management tray (160) comprises a first mounting slot (161), a second mounting slot (162), and a third mounting slot (163), the first mounting slot (161) is configured to mount the fiber optic splitter, the second mounting slot (161) is located on a side that is of the first mounting slot and far away from the mounting panel (130), to mount a fiber management tray platter (165) to house an input pigtail of the fiber optic splitter, the third mounting slot (163) is located between the first mounting slot (161) and the mounting panel (130) to mount a pigtail protective casing, and the pigtail protective casing is configured to house an output pigtail of the fiber optic splitter.

4. The fiber access terminal (100) according to claim 3, wherein the mounting panel comprises an end wall (1301) and a side wall (1302), the side wall (1302) is arranged to encircle the end wall (1301), the side wall (1302) encloses an accommodating space (1303), the accommodating space (1303) is used to house a part of the fiber adapter (200), the side wall (1302) is configured to connect the first housing (110) and the second housing (120), the adapter mounting hole (133) is located in the end wall (1301), and the pigtail protective casing (166) is bonded on the side wall (1302).

5. The fiber access terminal (100) according to any one of claims 1 to 4, wherein the mounting panel (130) provides a first notch (151), the second housing (120) provides a second notch (125), the first notch (151) is connected to the second notch (125) to form a fiber mounting hole (153), and the fiber mounting hole (153) passes through the receptacle (140) to the outside of the fiber access terminal (100).

6. The fiber access terminal (100) according to claim 5, wherein the fiber mounting hole (153) comprises a first fiber mounting hole (1531) and a second fiber mounting hole (1532), the first fiber mounting hole (1531) is configured to mount a feeder fiber of transmission fibers, and the second fiber mounting hole (1532) is configured to mount a distribution fiber of the transmission fibers.

7. The fiber access terminal (100) according to claim 6, wherein the fiber management tray (160) further comprises a fiber fastener (164) configured to fasten the transmission fibers on the fiber management tray.

8. The fiber access terminal (100) according to any one of claims 1 to 7, wherein the first housing (110) is rotationally connected to the second housing (120), the fiber access terminal further comprises a fastening plate (171) and a sliding bar (172), the fastening plate (171) is connected to the first housing (110) and provides a sliding slot (173), the fastening plate (171) provides at least one limiting area located in the sliding slot (173), one end of the sliding bar (172) is connected to the second housing (120), and the other end of the sliding bar (172) is housed in the sliding slot (173) and cooperates with the limiting area to limit an angle between the first housing (110) and the second housing (120).

9. The fiber access terminal (100) according to any one of claims 1 to 8, wherein the fiber access terminal (100) further comprises a first sealing element (31) and a second sealing element (32), the first sealing element (31) is located in a connection part between the first housing (110) and the second housing (120), and the second sealing element (32) is located in a connection part among the mounting panel (130), the first housing (110), and the second housing (120).

10. A fiber distribution apparatus, comprising a fiber adaptor (200) and the fiber access terminal (100) according to any one of claims 1 to 9, and the fiber adaptor (200) is mounted to the adaptor mounting hole in the fiber access terminal (100).

## Patentansprüche

1. Faserzugangsanschluss (100), der Folgendes umfasst:
ein erstes Gehäuse (110) und ein zweites Gehäuse (120), wobei das erste Gehäuse mit dem zweiten Gehäuse (120) verbunden ist, um einen Behälter (140) und eine Öffnung (141) zu bilden, und wobei die Öffnung sich auf einer Seite des Behälters (140) befindet;
eine Montageplatte (130), die in der Öffnung (141) aufgenommen und sowohl mit dem ersten Gehäuse (110) als auch mit dem zweiten Gehäuse (120) verbunden ist, wobei die Montageplatte (130) ein Adaptermontageloch (133) umfasst, und wobei das Adaptermontageloch (133) den Behälter (140) zur Außenseite des Faserzugangsanschlusses (100) durchläuft, um einen Faseradapter (200) zu montieren, **dadurch gekennzeichnet, dass**
der Faserzugangsanschluss ferner eine Faserführungsablage (160) umfasst, wobei die Faserführungsablage (160) sich in dem Behälter befindet und drehbar mit dem zweiten Gehäuse (120) verbunden ist, wobei die Montageplatte (130) feststehend mit der Faserführungsablage (160) verbunden ist, und wobei die Faserführungsablage (160) dazu konfiguriert ist, einen faseroptischen Teiler zu montieren und eine optische Faser zu befestigen.

2. Faserzugangsanschluss (100) nach Anspruch 1, wobei das zweite Gehäuse einen Begrenzungsanschlag (1241) umfasst, wobei die Faserführungsablage (160) einen vorstehenden Teil (1671) umfasst, wobei der Begrenzungsanschlag (1241) und der vorstehende Teil (1671) sich in einem Verbindungsteil zwischen dem zweiten Gehäuse (120) und der Faserführungsablage (160) befinden und miteinander kooperieren, um eine Positionsbeziehung zwischen der Faserführungsablage (160) und dem zweiten Gehäuse (120) zu begrenzen, um zu verhindern, dass die Faserführungsablage (160) relativ zu dem zweiten Gehäuse (120) zurückschwingt.

3. Faserzugangsanschluss (100) nach Anspruch 1, wobei die Faserführungsablage (160) einen ersten Montageschlitz (161), einen zweiten Montageschlitzt (162) und einen dritten Montageschlitz (163) umfasst, wobei der erste Montageschlitz (161) dazu konfiguriert ist, den faseroptischen Teiler zu montieren, der zweite Montageschlitz (161) sich auf einer Seite befindet, die sich weg von dem ersten Montageschlitz und weit weg von der Montageplatte (130) befindet, um eine Faserführungsablageschale (165) zu montieren, um eine Eingangsanschlusslitze des fiberoptischen Teilers unterzubringen, die dritte Montageplatte (163) sich zwischen dem ersten Montageschlitz (161) und der Montageplatte (130) befindet, um eine Anschlusslitzenschutzhülle zu montieren und die Anschlusslitzenschutzhülle dazu konfiguriert ist, eine Ausgangsanschlusslitze des faseroptischen Teilers unterzubringen.

4. Faserzugangsanschluss (100) nach Anspruch 3, wobei die Montageplatte eine Endwand (1301) und eine Seitenwand (1302) umfasst, wobei die Seitenwand (1302) dazu ausgelegt ist, die Endwand (1301) zu umgeben, wobei die Seitenwand (1302) einen Aufnahmeraum (1303) umschließt, wobei der Aufnahmeraum (1303) verwendet wird, um einen Teil des Faseradapters (200) unterzubringen, wobei die Seitenwand (1302) dazu konfiguriert ist, das erste Gehäuse (110) und das zweite Gehäuse (120) zu verbinden, wobei das Adaptermontageloch (133) sich in der Endwand (1301) befindet und die Anschlusslitzenschutzhülle (166) an die Seitenwand (1302) gebunden ist.

5. Faserzugangsanschluss (100) nach einem der Ansprüche 1 bis 4, wobei die Montageplatte (130) eine erste Aussparung (151) bereitstellt, das zweite Gehäuse (120) eine zweite Aussparung (125) bereitstellt, die erste Aussparung (151) mit der zweiten Aussparung (125) verbunden ist, um ein Fasermontageloch (153) zu bilden, und das Fasermontageloch (153) den Behälter (140) zur Außenseite des Faserzugangsanschlusses (100) durchläuft.

6. Faserzugangsanschluss (100) nach Anspruch 5, wobei das Fasermontageloch (153) ein erstes Fasermontageloch (1531) und ein zweites Fasermontageloch (1532) umfasst, wobei das erste Fasermontageloch (1531) dazu konfiguriert ist, eine Zuführfaser von Übertragungsfasern zu montieren und das zweite Fasermontageloch (1532) dazu konfiguriert ist, eine Verteilungsfaser der Übertragungsfasern zu montieren.

7. Faserzugangsanschluss (100) nach Anspruch 6, wobei die Faserführungsablage (160) ferner ein Faserbefestigungsmittel (164) umfasst, das dazu konfiguriert ist, die Übertragungsfasern an der Faserführungsablage zu befestigen.

8. Faserzugangsanschluss (100) nach einem der Ansprüche 1 bis 7, wobei das erste Gehäuse (110) drehbar mit dem zweiten Gehäuse (120) verbunden ist, wobei der Faserzugangsanschluss ferner eine Befestigungsplatte (171) und eine Gleitleiste (172) umfasst, wobei die Befestigungsplatte (171) mit dem ersten Gehäuse (110) verbunden ist und einen Gleitschlitz (173) bereitstellt, wobei die Befestigungsplatte (171) mindestens eine Begrenzungsfläche bereitstellt, die sich in dem Gleitschlitz (173) befindet, wobei ein Ende der Gleitleiste (172) mit dem zweiten Gehäuse (120) verbunden ist, und das andere Ende der Gleitleiste (172) in dem Gleitschlitz (173) untergebracht ist und mit der Begrenzungsfläche kooperiert, um einen Winkel zwischen dem ersten Gehäuse (110) und dem zweiten Gehäuse (120) zu begrenzen.

9. Faserzugangsanschluss (100) nach einem der Ansprüche 1 bis 8, wobei der Faserzugangsanschluss (100) ferner ein erstes Dichtungselement (31) und ein zweites Dichtungselement (32) umfasst, wobei das erste Dichtungselement (31) sich in einem Verbindungsteil zwischen dem ersten Gehäuse (110) und dem zweiten Gehäuse (120) befindet, und wobei das zweite Dichtungselement (32) sich in einem Verbindungsteil zwischen der Montageplatte (130), dem ersten Gehäuse (110) und dem zweiten Gehäuse (120) befindet.

10. Faserverteilungsvorrichtung, die einen Faseradapter (200) und den Faserzugangsanschluss (100) nach einem der Ansprüche 1 bis 9 umfasst, und wobei der Faseradapter (200) an dem Adaptermontageloch in dem Faserzugangsanschluss (100) montiert ist.

## Revendications

1. Terminal d'accès de fibres (100), comprenant :
un premier boîtier (110) et un second boîtier (120), dans lequel le premier boîtier est connecté au second boîtier (120) pour former un réceptacle (140) et une ouverture (141), et l'ouverture est située sur un côté du réceptacle (140) ;
un panneau de montage (130) qui est logé dans l'ouverture (141) et connecté à la fois au premier boîtier (110) et au second boîtier (120), dans lequel le panneau de montage (130) comprend un trou de montage d'adaptateur (133), et le trou de montage d'adaptateur (133) passe à travers le réceptacle (140) vers l'extérieur du terminal d'accès de fibres (100) pour permettre le montage d'un adaptateur de fibres (200), **caractérisé en ce que**
le terminal d'accès de fibres comprend en outre un chemin de gestion de fibres (160), le chemin de gestion de fibres (160) est situé dans le réceptacle et connecté de manière rotative au second boîtier (120), le panneau de montage (130) est connecté à demeure au chemin de gestion de fibres (160), et le chemin de gestion de fibres (160) est configuré pour permettre le montage d'un diviseur de fibre optique et fixer une fibre optique.

2. Terminal d'accès de fibres (100) selon la revendication 1, dans lequel le second boîtier comprend une butée limite (1241), le chemin de gestion de fibres (160) comprend une partie saillante (1671), la butée limite (1241) et la partie saillante (1671) sont situées dans une partie de connexion entre le second boîtier (120) et le chemin de gestion de fibres (160) et coopèrent l'une avec l'autre pour limiter une relation de position entre le chemin de gestion de fibres (160) et le second boîtier (120), pour empêcher le chemin de gestion de fibres (160) de basculer vers l'arrière par rapport au second boîtier (120).

3. Terminal d'accès de fibres (100) selon la revendication 1, dans lequel le chemin de gestion de fibres (160) comprend une première fente de montage (161), une deuxième fente de montage (162), et une troisième fente de montage (163), la première fente de montage (161) est configurée pour permettre le montage du diviseur de fibre optique, la deuxième fente de montage (161) est située sur un côté qui est celui de la première fente de montage et à distance du panneau de montage (130), pour permettre le montage d'une dalle de chemin de gestion de fibres (165) pour loger une fibre amorce d'entrée du diviseur de fibre optique, la troisième fente de montage (163) est située entre la première fente de montage (161) et le panneau de montage (130) pour permettre le montage d'une enveloppe protectrice de fibre amorce, l'enveloppe protectrice de fibre amorce est configurée pour loger une fibre amorce de sortie du diviseur de fibre optique.

4. Terminal d'accès de fibres (100) selon la revendication 3, dans lequel le panneau de montage comprend une paroi terminale (1301) et une paroi latérale (1302), la paroi latérale (1302) est agencée pour encercler la paroi terminale (1301), la paroi latérale (1302) renferme : un espace de réception (1303), l'espace de réception (1303) est utilisé pour loger une partie de l'adaptateur de fibres (200), la paroi latérale (1302) est configurée pour connecter le premier boîtier (110) et le second boîtier (120), le trou de montage d'adaptateur (133) est situé dans la paroi terminale (1301) et l'enveloppe protectrice de fibre amorce (166) est liée sur la paroi latérale (1302).

5. Terminal d'accès de fibres (100) selon l'une quelconque des revendications 1 à 4, dans lequel le panneau de montage (130) fournit une première encoche (151), le second boîtier (120) fournit une seconde encoche (125), la première encoche (151) est connectée à la seconde encoche (125) pour former un trou de montage de fibres (153), et le trou de montage de fibres (153) passe à travers le réceptacle (140) vers l'extérieur du terminal d'accès de fibres (100).

6. Terminal d'accès de fibres (100) selon la revendication 5, dans lequel le trou de montage de fibres (153) comprend un premier trou de montage de fibres (1531) et un second trou de montage de fibres (1532), le premier trou de montage de fibres (1531) est configuré pour permettre le montage d'une fibre d'alimentation de fibres de transmission, et le second trou de montage de fibres (1532) est configuré pour permettre le montage d'une fibre de distribution des fibres de transmission.

7. Terminal d'accès de fibres (100) selon la revendication 6, dans lequel le chemin de gestion de fibres (160) comprend en outre un dispositif de fixation de fibres (164) configuré pour fixer les fibres de transmission sur le chemin de gestion de fibres.

8. Terminal d'accès de fibres (100) selon l'une quelconque des revendications 1 à 7, dans lequel le premier boîtier (110) est connecté de manière rotative au second boîtier (120), le terminal d'accès de fibres comprend en outre une plaque de fixation (171) et une barre coulissante (172), la plaque de fixation (171) est connectée au premier boîtier (110) et fournit une fente de coulissement (173), la plaque de fixation (171) fournit au moins une zone limite située dans la fente de coulissement (173), une extrémité de la barre coulissante (172) est connectée au second boîtier (120), et l'autre extrémité de la barre coulissante (172) est logée dans la fente de coulissement (173) et coopère avec la zone limite pour limiter un angle entre le premier boîtier (110) et le second boîtier (120).

9. Terminal d'accès de fibres (100) selon l'une quelconque des revendications 1 à 8, dans lequel le terminal d'accès de fibres (100) comprend en outre un premier élément d'étanchéité (31) et un second élément d'étanchéité (32), le premier élément d'étanchéité (31) est situé dans une partie de connexion entre le premier boîtier (110) et le second boîtier (120), et le second élément d'étanchéité (32) est situé dans une partie de connexion au milieu du panneau de montage (130), du premier boîtier (110), et du second boîtier (120).

10. Appareil de distribution de fibres, comprenant un adaptateur de fibres (200) et le terminal d'accès de fibres (100) selon l'une quelconque des revendications 1 à 9, et l'adaptateur de fibres (200) est monté sur le trou de montage d'adaptateur dans le terminal d'accès de fibres (100).
